(19) **Europäisches Patentamt**

**European Patent Office**

**Office européen des brevets**

(11) **EP 1 229 992 B1**

(12) **EUROPÄISCHE PATENTSCHRIFT**

(45) Veröffentlichungstag und Bekanntmachung des Hinweises auf die Patenterteilung:
**11.02.2004 Patentblatt 2004/07**

(21) Anmeldenummer: **00978922.3**

(22) Anmeldetag: **09.11.2000**

(51) Int Cl.⁷: **B01D 53/32**, B03C 3/12, B03C 3/36, B03C 3/41, F01N 3/28, F01N 3/01, F01N 3/021, F01N 3/022

(86) Internationale Anmeldenummer:
**PCT/AT2000/000294**

(87) Internationale Veröffentlichungsnummer:
**WO 2001/034281 (17.05.2001 Gazette 2001/20)**

(54) **FILTERANORDNUNG ZUM ABSCHEIDEN VON RUSSPARTIKEL AUS EINEM ABGASSTROM**

FILTER SYSTEM FOR SEPARATING SOOT PARTICLES FROM A STREAM OF EXHAUST GAS

SYSTEME DE FILTRE POUR L'EXTRACTION DE PARTICULES DE SUIE D'UN COURANT DE GAZ D'ECHAPPEMENT

(84) Benannte Vertragsstaaten:
**AT BE CH CY DE DK ES FI FR GB GR IE IT LI LU MC NL PT SE TR**

(30) Priorität: **10.11.1999 AT 189799**

(43) Veröffentlichungstag der Anmeldung:
**14.08.2002 Patentblatt 2002/33**

(73) Patentinhaber: **Fleck, Carl Maria, Prof. Dr.**
**2391 Kaltenleutgeben (AT)**

(72) Erfinder: **Fleck, Carl Maria, Prof. Dr.**
**2391 Kaltenleutgeben (AT)**

(74) Vertreter: **KLIMENT & HENHAPEL**
**Patentanwälte**
**Singerstrasse 8**
**1010 Wien (AT)**

(56) Entgegenhaltungen:
**EP-A- 0 332 609        WO-A-91/16528**
**US-A- 5 402 639**

**Beschreibung**

Die Erfindung bezieht sich auf eine Filteranordnung zum Abscheiden und Umwandeln von Rußpartikel aus einem Abgasstrom gemäß dem Oberbegriff des Anspruches 1.

Bei der aus US 5 141 714 bekannten derartigen Vorrichtung werden die Rußpartikel an den Porengrenzen einer porösen Keramik abgeschieden und von Zeit zu Zeit durch Anlegen einer Spannung an den Elektroden des Filters abgebrannt. Während die Abscheidung der Rußpartikel also im wesentlichen mechanisch erfolgt, dient die angelegte Gleichspannung zum thermischen Abbrand abgelagerter Partikel, was durch die relativ hohen Ströme über die leitenden Rußablagerungen bewirkt wird.

In alternativen Ausführungsformen ist die poröse Keramik von axial verlaufenden Kanälen durchzogen, durch die das Abgas geleitet wird. Die Kanäle sind dabei an einem Ende offen und am jeweiligen anderen Ende geschlossen. Der Stand der Technik sieht dabei vor, die an ein und derselben Stirnseite des Wabenkörpers offenen und geschlossenen, im wesentlichen quadratischen Kanäle schachbrettartig zu verteilen. Dadurch bauen sich über alle vier Wände eines jeden Kanals Druckdifferenzen auf, sodass das Abgas alle vier Wände eines jeden Kanals durchströmt und darin enthaltenen Rußpartikel um die Poren dieser Wände abgelagert werden. Bei Anlegen einer Gleichspannung zwecks thermischem Abbrand der Rußablagerungen kommt es daher innerhalb des gesamten Wabenkörpers zu hohen lokalen Temperaturen, was das Filtermaterial stark belastet. Außerdem ist diese Art des Rußabbrandes mit hohem Energieaufwand verbunden.

Um die zum Abbrennen der abgelagerten Rußpartikel erforderliche Temperatur zu erreichen, ist auch die Verwendung eines Additivs und einer Nacheinspritzung von Treibstoff, die jedoch nur durch ein "common rail"-Einspritzsystem möglich ist, sowie die Anordnung eines zusätzlichen Katalysators bekannt.

Diese diskontinuierliche Regeneration ist nicht nur sehr aufwendig, sondern kann bei extremer Kälte auch vollständig zum Erliegen kommen und somit ein komplettes Versagen der Dieselfahrzeuge bewirken.

Bei dem in AT 404 285 B (EP 088 0642 A) beschriebenen Verfahren wird der Ruß nach einer Aufladung in den beidseitig offenen Kanälen eines aus einer dichten Keramik hergestellten Wabenkörpers durch ein elektrisches Gleichspannungsfeld abgeschieden und kontinuierlich elektrochemisch durch ein Gasplasma zu Kohlendioxid oxidiert, das durch das Abscheidefeld erregt wird. Im Rahmen dieser Geometrie der beidseitig offenen Kanälen hat dieses Gleichspannungsfeld einerseits die Aufgabe, die Abscheidung der Rußpartikel zu gewährleisten, andererseits aber auch die Verbrennung der abgeschiedenen Partikel zu bewirken. Letzteres bedingt die Anwendung hoher Gleichspannungen, was zu strukturellen Beschädigungen am Wabenfilter führen kann, insbesondere dann, wenn es zur unerwünschten Bildung eines Funkens kommt.

Die EP-A-0 332 609 beschreibt eine Filteranordnung zum Abscheiden und Umwandeln von Rußpartikeln aus einem Abgasstrom in gasförmige Substanzen, bei dem das Abgas durch axial verlaufende Kanäle eines Wabenfilters hindurchgeleitet wird und an parallel zu den Elektroden eine Spannungsquelle angelegt wird, die in den Kanälen ein senkrecht zu deren Längserstreckung verlaufendes elektrisches Feld erzeugen, wobei die Kanäle des Wabenfilters jeweils an einer Stirnseite des Filters offen und an der jeweils anderen Stirnseite verschlossen sind. Ferner beschreibt Dokument (1) Verfahren zum Abscheiden und Umwandeln von Rußpartikeln aus einem Abgasstrom in gasförmige Substanzen, bei dem das Abgas durch axial verlaufende Kanäle eines Wabenfilters hindurchgeleitet wird und an parallel zu den Elektroden eine Spannung an das Wabenfilter angelegt wird, wobei die an die Elektroden angelegten Spannungsimpulse in den Kanälen ein senkrecht zu deren Längserstreckung verlaufendes Impulsfeld erzeugen.

Ziel der Erfindung ist es, diese Nachteile zu vermeiden und eine Filteranordnung der eingangs erwähnten Art vorzuschlagen, bei der eine ausreichende Rußabscheidung unter allen Bedingungen und auch bei plötzlichen Lastwechseln gegeben ist.

Erfindungsgemäß wird dies bei einer Vorrichtung der eingangs erwähnten Art durch die kennzeichnenden Merkmale des Anspruches 1 erreicht.

Durch die vorgeschlagenen Maßnahme werden die Rußpartikel mechanisch in den parallel zu den Elektroden verlaufenden Wänden des Wabenkörpers zurückgehalten, wobei die Abscheidung der Rußpartikel auch durch das sich aufgrund der Spannungsimpulse ausbildende elektrische Feld unterstützt wird. Gleichzeitig kommt es aufgrund des impulsweise auftretenden elektrischen Feldes und der damit verbundenen Emission und Beschleunigung von Elektronen zu einer Umwandlung bzw. Oxidation der Rußpartikel zu Kohlendioxid und damit zu einer Regeneration des Filters, sodass dieser nicht verstopfen kann. Der Rußabbrand erfolgt also nicht durch bloßes Aufheizen und somit thermisches Abbrennen der Rußpartikel, sondern vielmehr über massiven Elektronenbeschuss innerhalb der Kanäle.

Diese Vorgangsweise bedingt allerdings eine Hochspannungstauglichkeit des Wabenfilters. Es ist daher entscheidend, die Anordnung der wechselseitig offenen und verschlossenen Kanäle richtig zu wählen. Statt der eingangs erwähnten schachbrettartigen Verteilung der an ihrer Stirnseite entweder offenen oder verschlossenen Kanäle ist es bedeutend zweckmäßiger, wenn die im jeweils gleichen Normalabstand von der Elektrode verlaufenden Kanäle an ihrer Stirnseite entweder alle offen oder alle verschlossen sind. Durch diese an der Einströmseite des Abgases vorgesehenen Anordnung der verschlossenen und offenen Kanäle wird erreicht, dass zwischen benachbarten Kanälen, die jeweils denselben Normalabstand von den Elektroden aufweisen, kein Druckunterschied herrscht und daher die Rußpartikel nur in den im wesentlichen parallel zu den Elektroden verlaufenden Wänden der Kanäle Rußpartikel abgelagert werden, wodurch der elektrische Widerstand dieser Wände sinkt. Diese Wände einander benachbarter Kanäle, durch die Rußdurchtritt tatsächlich stattfindet, liegen aber jeweils auf gleichem Potential, sodass die Abnahme des elektrischen Widerstandes unerheblich ist, wogegen die senkrecht zu den Elektroden verlaufenden Wände nicht mit Rußpartikel angereichert werden und deren elektrischer Widerstand daher im wesentlichen gleich hoch bleibt, und sich kein nennenswerter Stromfluß über diese Wände ergibt. Dadurch bleibt die erforderliche elektrische Leistung gering und ermöglicht die Beaufschlagung des Wabenfilters mit Impulsen, wobei die Dauer der Impulse sowie der dazwischenliegenden Pausen über einen weiten Bereich variieren kann.

Bei der Festlegung der Impulsdauer der einzelnen Spannungsimpulse empfiehlt es sich, die folgenden begrenzenden Bedingungen einzuhalten, um die Eigenschaften des erzeugten Impulsfeld-Plasmas für dessen Anwendung bei keramischen Wabenfiltern zu optimieren:

- die aus einer der Wände des Kanals austretenden Elektronen müssen innerhalb der Pulsdauer die gegenüberliegende Wand erreichen können und
- die Impulsdauer darf nicht die Ausbildung eines Vorfunkens ("streamer") erlauben.

Zur Abschätzung einer unteren Schranke $\tau_1$ der Pulsdauer aus geometrischen Gegebenheiten des Wabenfilters ist es notwendig, daß die Wege der Elektronen im Abgas während einer Impulsbreite größer sind als der Abstand der Wände des Kanals in Feldrichtung, also

$$\omega . E . \tau_1 > d$$

wobei $\omega$ **[cm²/Vs]** die Beweglichkeit der freien Elektronen im elektrischen Feld, **E [V/cm]** die elektrische Feldstärke, $\tau_1$ **[sec]** die Pulsdauer und **d [cm]** die Distanz zwischen den Kanalwänden in Feldrichtung bedeuten.

Soll ein größerer Teil der gebildeten Elektronen zur Oxidation des Rußes ausgenützt werden, muß diese Bedingung zu

$$\omega . E . \tau_1 >> d$$

verschärft werden.

Die Beweglichkeit $\omega$ freier Elektronen in einem höheren elektrischen Feld beträgt ca.

$$\omega \approx 10^{+3} \ /cm^2/Vs/$$

so daß die erste Bedingung zu der Ungleichung

$$E . \tau_1 / d >> \omega^{-1} \ /Vs/cm^2/$$

oder, wenn für $\omega$ eingesetzt und nach $\tau$ umgeformt wird

$$\tau_1 >> 10^{-3} \ d/E \ /s/$$

lautet.

Die zweite Bedingung muß experimentell ermittelt werden, da sie durch die Anzahl der porösen keramischen Trennwände des Wabenkörpers bestimmt wird. Ohne diese Trennwände liegt die Zeit zur Ausbildung eines Vorfunkens etwa zwischen 0,2 μs und 0,5 μs. Durch die zahlreichen Trennwände zwischen den Kanälen eines Wabenkörpers kann für die erlaubte obere Schranke $\tau_2$ der Pulsbreite $\tau$ und im Rahmen realistischer Feldstärken folgendes offene Intervall geschätzt werden:

$$5.10^{-6} > \tau_2 > 2.10^{-6} \ /s/$$

Man erhält daher nach experimenteller Klärung der oberen Schranke $\tau_2$ der Impulsbreite $\tau$ etwa die folgende Einschränkung

$$5.10^{-6} > \tau >> 10^{-3} d/E \ /s/,$$

die in Bezug auf das Verhältnis **d/E** frei gestalten werden kann. Da aus Gründen der Baugröße und der gesamten Filterfläche zweckmäßigerweise d mit etwa 0,1cm angesetzt werden kann, ergibt sich

$$5.10^{-6} > \tau >> 10^{-4}/E \ /s/$$

und bei einer Impulsfeldstärke von etwa 3 kV/cm

$$5.10^{-6} > \tau >> 3.10^{-8} \ /s/,$$

so daß die Pulsbreite eines unipolaren Impulses oder des unipolaren Impulsanteils eines bipolaren Impulses mit einer Feldamplitude von etwa 3 kV/cm für ein effizientes Abbrennen des Rußes innerhalb folgendem offenen Intervall verfügbar ist:

$$5.10^{-6} > \tau > 10^{-7} \ /s/,$$

also etwa zwischen 0,1 μs und 5 μs.

Durch die Merkmale des Anspruches 3 wird eine Aufladung der Rußpartikel vor deren Eintitt in den Wabenkörper erreicht, wodurch die Abscheidung der Rußpartikel verbessert wird.

Durch die Merkmale des Anspruches 5 ergibt sich der Vorteil, daß die Abscheidung der Rußpartikel durch die Feldimpulse beeinflußt werden kann und durch einen Wechsel der Polarität sichergestellt ist, daß die Rußpartikel an beiden parallel zu den Elektroden verlaufenden Trennwänden eines jeden Kanals abgeschieden und durch das entstehende Plasma oxidiert werden. Dabei kann der Wechsel der Polarität nach jedem einzelnen Impuls oder aber auch nach einer bestimmten Anzahl von Impulsen erfolgen.

Die eine Elektronenemission, bzw. eine erhebliche Beschleunigung der Elektronen bewirkenden Spannungsimpulse können aber auch als hochfrequente Impulse auf einer Folge von bipolaren niederfrequenten Impulsen mit einer Impulsdauer von mindestens 10ms, wobei die Impulsdauer der niederfrequenten Impulse aber auch 2 bis 3sec betragen kann, aufmoduliert sein. Es muß dabei lediglich sichergestellt sein, daß die an den Elektroden anliegende Spannung soweit absinkt, um eine nennenswerte Elektronenemission, bzw. Beschleunigung derselben in den Kanälen des Wabenkörpers zu vermeiden. Dabei kann der Wechsel der Polarität der hochfrequenten Spannungsimpulsen beim Wechsel der Polarität der niederfrequenten Impulse erfolgen.

Besonders günstige Verhältnisse ergeben sich bei Einhaltung der in den Ansprüchen 6 bis 9 genannten Bedingungen.

Durch die in den Ansprüchen 10 und 11 angegebenen Bedingungen lässt sich eine entsprechende Anpassung der Dauer der Spannungsimpulse an die im jeweiligen Wabenkörper gegebenen geometrischen Verhältnisses erreichen.

Durch die Merkmale des Anspruches 12 ist einerseits sichergestellt, dass ein genügend starkes elektrisches Impulsfeld aufgebaut wird, um eine sichere Abscheidung und Umwandlung der Rußpartikel zu gewährleisten und andererseits die Spannungsquelle und der Wabenkörper vor einer Überlastung geschützt werden.

In diesem Zusammenhang ist es besonders vorteilhaft, die Merkmale des Anspruches 13 vorzusehen. Dabei ergibt sich auch eine sehr gute Anpassung der Abscheidung der Rußpartikel an die in Abhängigkeit von den Betriebsbedingungen der Brennkraftmaschine zu erwartende Partikelmenge.

Durch die vorgeschlagenen Maßnahmen ist sichergestellt, daß zwischen den durch eine senkrecht zu den Elektroden verlaufende Wand getrennten jeweils benachbarten Kanälen keine Druckdifferenzen auftreten und es daher im Bereich dieser Wände zu praktisch keiner Ablagerung von Rußpartikel kommt, sodaß diese Wände einen entsprechend hohen elektrischen Widerstand beibehalten. Dadurch wird die Ausbildung eines entsprechend hohen elektrischen Impulsfeldes im Inneren der Kanäle aufgrund der an die Elektroden angelegten Spannungsimpulsen ermöglicht.

Die Erfindung wird nun anhand von Zeichnungen näher erläutert. Dabei zeigen:

Fig. 1 ein schematisches Explosionsbild der Anordnung einer zylindrischen Ausführungsform des Filters zwischen einer trichterförmigen Zuleitung von Abgas und einer Abführung;
Fig. 2 eine Illustration der wechselseitig offenen und geschlossenen Kanäle zum besseren Verständnis der nachfolgenden Figuren;
Fig. 3 schematisch einen Ausschnitt aus einer Stirnansicht eines Wabenkörpers gemäß Fig. 1 zur Durchführung des erfindungsgemäßen Verfahrens;
Fig. 4 schematisch einen Längsschnitt durch einen Wabenkörper gemäß Fig. 1;
Fig. 5 eine alternative Ausführungsform des Wabenkörpers unter Verwendung eines rechteckigen Querschnitts;
Fig. 6 schematisch eine Stirnansicht des Wabenkörpers entlang der Linie VI in Fig. 5;
Fig. 7 schematisch einen Längsschnitt durch einen Wabenkörper entlang der Linie VII-VII in Fig. 5; und
Fig. 8 ein Blockschaltbild zur Erzeugung der Impulsfolge zur Beaufschlagung der Elektroden.

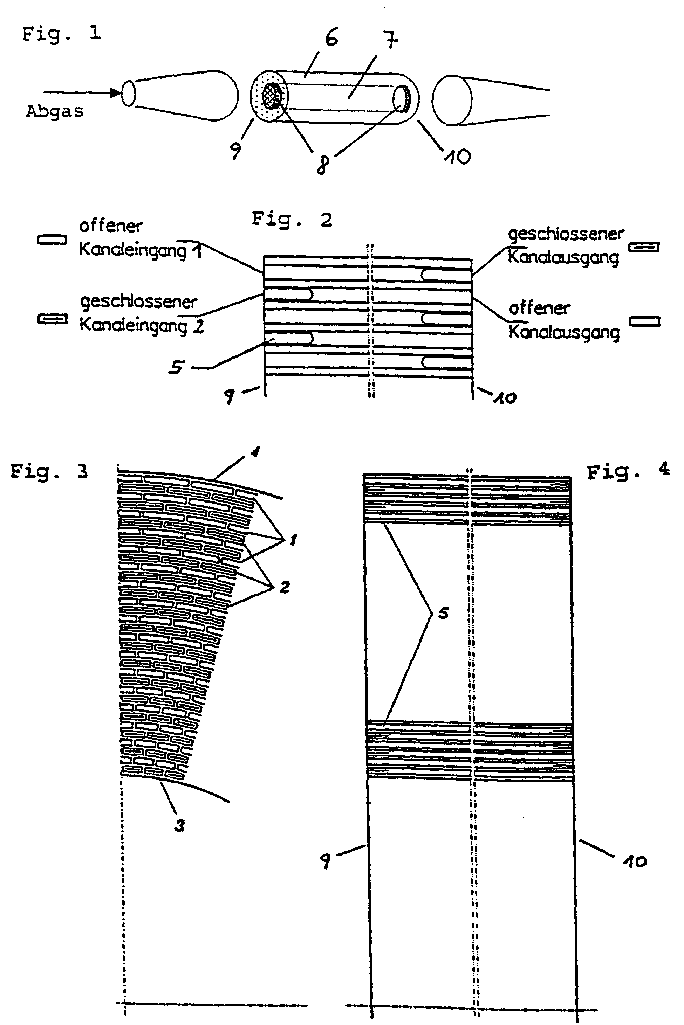

Fig. 1 zeigt die bevorzugte Ausführungsform des Filters, bei der eine zylindrische Geometrie des Wabenkörpers 6 mit einer zentrischen, axial verlaufenden Bohrung 7 gewählt wird. Diese Bohrung 7 ist beidseitig mit einem Pfropfen 8 aus isolierendem Material verschlossen. Innerhalb des so entstehenden Hohlraumes befindet sich eine Elektrode 3 (in Fig. 1 nicht dargestellt), die an der Innenseite der Mantelfläche des Wabenkörpers befestigt ist und über eine geeignete Zufuhr (in Fig. 1 nicht gezeigt) mit Hochspannung beaufschlagt wird. Eine sorgfältige Versiegelung der Bohrung 7 ist entscheidend, um die Bildung von Leitfähigkeitsbrücken zwischen den Elektroden 3 und 4 aufgrund von Rußablagerungen zu verhindern.

Wie aus der Fig. 3, die einen Ausschnitt der Einströmseite eines aus einer porösen Keramik hergestellten Wabenkörpers zeigt, zu ersehen ist, sind jeweils den gleichen Normalabstand von den an den Mantelflächen angeordneten Elektroden 3, 4 aufweisende Kanäle 1, 2 an der Einströmseite entweder mit Stopfen 5 verschlossen (Kanäle 2) oder offen (Kanäle 1).

Die lichte Höhe der Kanäle 1, 2, d.h. deren senkrecht zu den Elektroden 3, 4 verlaufende Querschnittserstreckung, beträgt zweckmäßigerweise weniger als 0,2cm, vorteilshafterweise weniger als 0,1cm, und ist daher kleiner als für die Ausbildung eines Vorfunkens (Streamer) mit vollem Ionisationsfeld erforderlich ist.

Dabei sind die einander benachbarten Lagen von Kanälen 1 und 2 ziegelmauerartig gegeneinander versetzt angeordnet, wobei an der Einströmseite 9 die einander in radialer Richtung, bzw. in Richtung senkrecht zu den Elektroden 3, 4 benachbarten Lagen von Kanälen 1 und 2 abwechselnd verschlossen oder offen sind. Wie aus den Figuren 2 und 4 zu ersehen ist, sind die an der Einströmseite 9 offenen Kanäle 1 an der Ausströmseite 10 durch Stopfen 5 verschlossen und vice versa. Dadurch sind die den Wabenkörper durchströmenden Abgase gezwungen, die parallel zu den Elektroden 3, 4 verlaufenden durchgehenden Wände zwischen einen unterschiedlichen Normalabstand von den Elektroden 3, 4 aufweisenden Kanälen 1, 2 zu durchströmen.

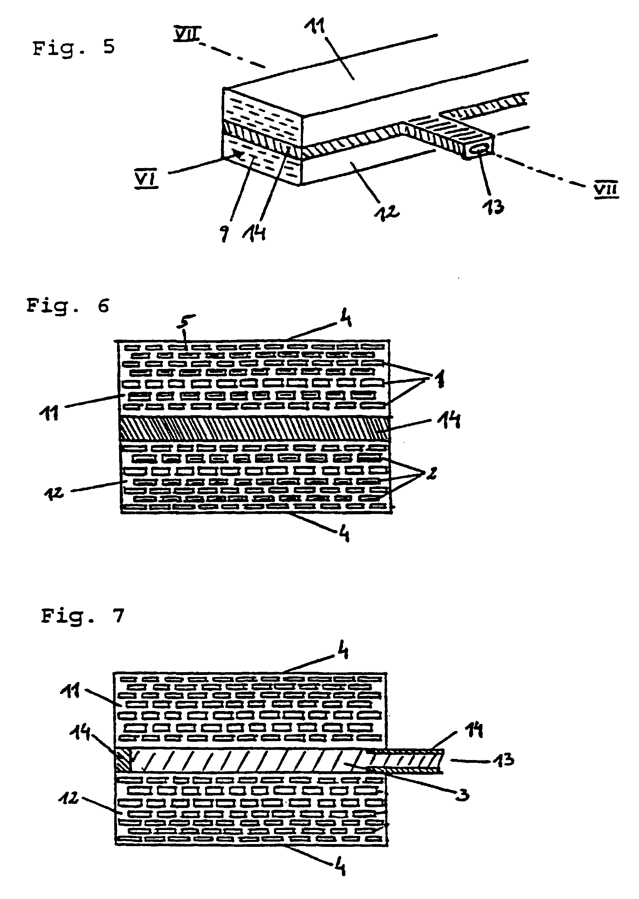

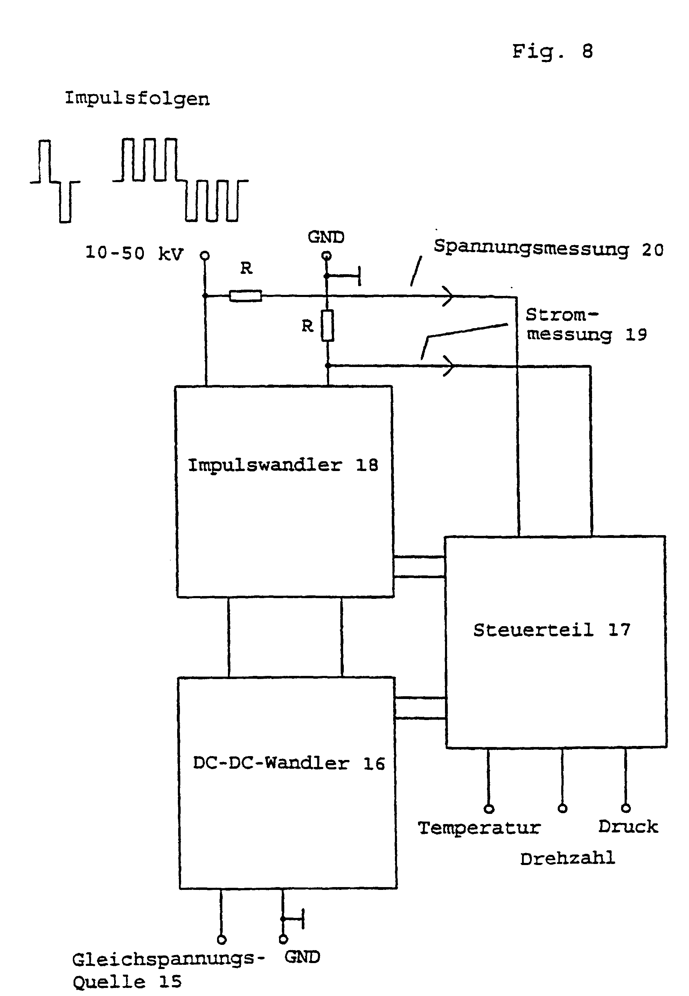

Fig. 5 zeigt eine alternative Ausführungsform des Filters, bei dem Wabenkörper mit im wesentlichen rechteckigen Querschnitten vorgesehen sind. In diesem Fall ist die innere Elektrode 3 zwischen zwei Wabenkörpern 11, 12 mit jeweils rechteckigem Querschnitt angeordnet. Die innere Elektrode 3, die etwa aus einer leitenden Keramik gebildet ist, ist dabei von isolierendem Material 14, etwa einer isolierenden Keramik, vollständig umgeben. Wie in Fig. 6 ersichtlich, sind somit an der Stirnseite des Filters die beiden Wabenkörper 11, 12 durch eine isolierende Schicht 14 getrennt. Es ist ferner ersichtlich, wie die Kanäle 1, 2 ziegelmauerartig gegeneinander versetzt sind und die Öffnungen jener Kanäle, die einen gleichen Normalabstand von der isolierenden Trennschicht und somit auch von der Elektrode 3 aufweisen, entweder alle verschlossen oder offen sind. Die Einkopplung der Hochspannung erfolgt über eine Zuleitung 13, wie in den Figuren 5 und 7 schematisch dargestellt ist. Fig. 7 zeigt dabei einen Querschnitt entlang der Linie VII-VII in Fig. 5, die Kanäle scheinen daher alle mit offenem Querschnitt auf.

Fig. 8 zeigt ein Blockschaltbild zur Erzeugung von Hochspannungsimpulsen aus einer Gleichspannungsquelle 15. Die Gleichspannung, vorzugsweise 12-24 V, wird dabei in einen DC-DC-Wandler 16 eingespeist, der an einen Steuerteil 17 gekoppelt ist. Der Steuerteil 17 verarbeitet etwa Informationen über motorspezifische Daten wie Druck, Drehzahl oder Temperatur. Ein Impulswandler 18 formiert schließlich Impulsfolgen, bei denen die Polarität aufeinanderfolgender Impulse entweder stets wechselt oder erst nach einer Folge von Impulsen gleicher Polarität. Bei der in Fig. 8 gezeigten Schaltung ist weiters vorgesehen, das Ausgangssignal des Impulswandlers 18 einer Strom- und Spannungsmessung 19, 20 zu unterziehen und diese Information ebenfalls im Steuerteil 17 zu verarbeiten. Mit den von einer Schaltung dieser Art gelieferten Hochspannungsimpulsen von 10-50 kV wird vorzugsweise die Elektrode 3 beaufschlagt, wobei die Elektrode 4 auf Masse liegt. Aufgrund dieser Spannungsimpulse bildet sich in den Kanälen 1, 2 ein elektrisches Impulsfeld aus.

Dabei wird ein Durchzünden des elektrischen Feldes dadurch verhindert, daß ein hochfrequentes Impulsfeld entweder unipolar oder auch bipolar ein- und ausgeschaltet wird, also sowohl nach einem unipolaren Impuls als auch nach einem bipolaren Impuls jeweils eine Pause eingefügt wird. Diese Pause dient zur Zerstreuung der Ionen des Vorfunkens durch Drift in Resten des elektrischen Feldes und Diffusion. Treten trotz dieser Maßnahmen Funken auf, so können diese detektiert und erfindungsgemäß die Pausen zwischen den einzelnen Impulsen verlängert werden.

Auch können erfindungsgemäß Impulse einer Polarität mehrfach wiederholt werden, um dann von Impulsen der anderen Polarität gefolgt zu werden. Insbesondere können hochfrequente Impulse einer Polarität jeweils auf einem niederfrequenten Impuls der gleichen Polarität sitzen, dessen Polarität sich mit dem Polaritätswechsel der hochfrequenten Impulse ebenfalls ändert. Von ganz besonderem Vorteil ist das erfindungsgemäße Impulsfeld-Verfahren durch die vorherige Aufladung der Rußteilchen in einer elektrischen Entladung, da durch den Beitrag der elektrischen Abscheidung im Impulsfeld, die den Ruß nicht in unmittelbarer Nähe der Poren deponiert, sowohl den reversiblen als auch den irreversiblen Anteil des Druckaufbaues stark verzögert.

**Patentansprüche**

1. Filteranordnung zum Abscheiden und Umwandeln von Rußpartikel aus einem Abgasstrom in gasförmige Substanzen, bei dem das Abgas durch axial verlaufende Kanäle (1, 2) eines aus einer porösen Keramik hergestellten Wabenfilters (6) hindurchgeleitet wird und an parallel zu den Kanälen (1, 2) verlaufenden Elektroden (3, 4) eine Spannungsquelle angelegt wird, die in den Kanälen (1, 2) ein senkrecht zu deren Längserstreckung verlaufendes elektrisches Feld erzeugen, **dadurch gekennzeichnet, dass** die Kanäle (1, 2) des Wabenfilters (6) lediglich jeweils an einer Stirnseite (9) des Filters offen und an der jeweils anderen Stirnseite (10) verschlossen sind, in der Art, dass die im jeweils gleichen Normalabstand zu einer der Elektroden (3, 4) verlaufenden Kanäle (1, 2) an ihrer Stirnseite (9) entweder alle offen oder alle geschlossen sind, und die Spannungsquelle ein Impulsfeld liefert.

2. Filteranordnung nach Anspruch 1, **dadurch gekennzeichnet, dass** nebeneinanderliegende, einen unterschiedlichen Normalabstand zu den Elektroden (3, 4) aufweisende Kanäle (1, 2) ziegelmauerartig gegeneinander versetzt sind und die Querschnittserstreckung der Kanäle (1, 2) senkrecht zu der Elektrode (3, 4) erheblich geringer ist als parallel zu dieser.

3. Filteranordnung nach Anspruch 1 oder 2, **dadurch gekennzeichnet, dass** dem Wabenfilter (6) eine Einrichtung zur elektrischen Aufladung der Abgase vorgeschalten ist.

**4.** Verfahren für den Betrieb einer Filteranordnung zum Abscheiden und Umwandeln von Rußpartikel aus einem Abgasstrom in gasförmige Substanzen, bei dem das Abgas durch axial verlaufende Kanäle (1, 2) eines aus einer porösen Keramik hergestellten Wabenfilters (6) hindurchgeleitet wird und an parallel zu den Kanälen (1, 2) verlaufenden Elektroden (3, 4) eine Spannung an den Wabenfilter (6) angelegt wird, **dadurch gekennzeichnet, dass** an die Elektroden (3, 4) angelegte Spannungsimpulse in den Kanälen (1, 2) ein senkrecht zu deren Längserstreckung verlaufendes elektrisches Impulsfeld erzeugen.

**5.** Verfahren für den Betrieb einer Filteranordnung nach Anspruch 4, **dadurch gekennzeichnet, dass** die Spannungsimpulse mit unterschiedlicher Polarität an die Elektroden (3, 4) angelegt werden, wobei der Wechsel der Polarität nach einer bestimmten Anzahl von Impulsen erfolgt.

**6.** Verfahren für den Betrieb einer Filteranordnung nach Anspruch 4 oder 5, **dadurch gekennzeichnet, dass** Spannungsimpulse mit einer Dauer von $10^{-8}$ bis $2 \cdot 10^{-5}$ sek. verwendet werden, wobei diese Impulse bei 120°C eine Feldstärke von mindestens 2kV/cm und bei 400°C eine Feldstärke von mindestens 0,5kV/cm in den Kanälen (2) des Wabenfilters erzeugen.

**7.** Verfahren für den Betrieb einer Filteranordnung nach Anspruch 6, **dadurch gekennzeichnet, dass** Spannungsimpulse mit einer Dauer von $10^{-7}$ bis $5 \cdot 10^{-6}$ sek verwendet werden.

**8.** Verfahren für den Betrieb einer Filteranordnung nach Anspruch 6, **dadurch gekennzeichnet, dass** bei 120°C die Spannungsimpulse eine Feldstärke von mindestens 3kV/cm in den Kanälen (2) des Wabenfilters erzeugen.

**9.** Verfahren für den Betrieb einer Filteranordnung nach Anspruch 6, **dadurch gekennzeichnet, dass** bei 400°C die Spannungsimpulse eine Feldstärke von mindestens 1kV/cm in den Kanälen (2) des Wabenfilters erzeugen.

**10.** Verfahren für den Betrieb einer Filteranordnung nach einem der Ansprüche 1 bis 9, **dadurch gekennzeichnet, dass** die Spannungsimpulse mit einer in Abhängigkeit von der Beweglichkeit der Elektronen im elektrischen Feld gewählten Impulsdauer verwendet werden, wobei die Dauer $\tau$ der Spannungsimpulse der Beziehung:

$$2 \cdot 10^{-5} \geq \tau \geq d/E \cdot 10^{-3} \ cm^2/V \ sek$$

entspricht, wobei d die Breite der Kanäle in Richtung des elektrischen Feldes in cm und E die Feldamplitude in V/cm bedeuten.

**11.** Verfahren für den Betrieb einer Filteranordnung nach Anspruch 10, **dadurch gekennzeichnet, dass** die Impulsdauer $\tau$ der Spannungsimpulse der Beziehung

$$5 \cdot 10^{-6} \geq \tau \geq d/E \cdot 10^{-3} \ cm^2/V \ sek$$

entspricht.

**12.** Verfahren für den Betrieb einer Filteranordnung nach einem der Ansprüche 1 bis 11, **dadurch gekennzeichnet, dass** allfällig auftretende Funkenentladungen erfasst und nach jeder Funkenentladung die Dauer der Spannungsimpulse schrittweise verkleinert oder die Dauer der Pausen zwischen je zwei Spannungsimpulsen schrittweise vergrößert wird.

**13.** Verfahren für den Betrieb einer Filteranordnung nach einem der Ansprüche 1 bis 12, **dadurch gekennzeichnet, dass** bei geringem Rußanfall die Pausen zwischen den Spannungsimpulsen verlängert werden, wobei zur Erfassung des Rußanfalls der Druckabfall über dem Wabenkörper oder spezifische Betriebsdaten der Brennkraftmaschine, wie z.B. Einspritzmenge, Drehzahl und Temperatur erfasst und ausgewertet werden.

**Claims**

**1.** A filter arrangement for separating and converting exhaust particulates from a stream of exhaust gas into gaseous substances, in which the exhaust gas is guided through axially extending channels (1, 2) of a honeycomb filter (6) made from a porous ceramic material and a voltage source is applied to electrodes (3, 4) extending parallel to the channels (1, 2), which electrodes produce in the channels (1, 2) an electric field extending perpendicular to its longitudinal extension, **characterized in that** the channels (1, 2) of the honeycomb filter (6) are open merely at one face side (9) of the filter and are closed off at the respective other face side (10), such that the channels (1, 2) each extending at the same normal distance from one of the electrodes (3, 4) are either all open or all closed off at their face side (9), and the voltage source supplies a pulse field.

**2.** A filter arrangement as claimed in claim 1, **characterized in that** adjacent channels (1, 2) which have a different normal distance to the electrode (3, 4) are mutually offset in a brickwork-like manner and the cross-sectional extension of the channels (1, 2) perpendicular to the electrode (3, 4) is considerably smaller than parallel to the same.

3. A filter arrangement as claimed in claim 1 or 2, **characterized in that** the honeycomb filter (6) is provided upstream with a device for the electric charging of the exhaust gases.

4. A method for the operation of a filter arrangement for separating and converting exhaust particulates from a stream of exhaust gas into gaseous substances, in which the exhaust gas is guided through axially extending channels (1, 2) of a honeycomb filter (6) made from a porous ceramic material and a voltage is applied to the honeycomb filter on electrodes (3, 4) extending parallel to the channels (1, 2), **characterized in that** voltage pulses applied to the electrodes (3, 4) produce in the channels an electric pulse field extending perpendicular to their longitudinal extension.

5. A method for the operation of a filter arrangement as claimed in claim 4, **characterized in that** the voltage pulses are applied with different polarity to the electrodes (3, 4), with the change of the polarity occurring after a specific number of pulses.

6. A method for the operation of a filter arrangement as claimed in claim 4 or 5, **characterized in that** the voltage pulses are used with a duration of $10^{-8}$ to $2 \cdot 10^{-5}$ seconds, with said pulses producing at $120°C$ a field strength of at least 2 kV/cm and at $400°C$ a field strength of at least 0.5 kV/cm in the channels (2) of the honeycomb filter.

7. A method for the operation of a filter arrangement as claimed in claim 6, **characterized in that** the voltage pulses are used with a duration of $10^{-7}$ to $5 \cdot 10^{-6}$ seconds.

8. A method for the operation of a filter arrangement as claimed in claim 6, **characterized in that** at $120°C$ the voltage pulses produce a field strength of at least 3 kV/cm in the channels (2) of the honeycomb filter.

9. A method for the operation of a filter arrangement as claimed in claim 6, **characterized in that** at $400°C$ the voltage pulses produce a field strength of at least 1 kV/cm in the channels (2) of the honeycomb filter.

10. A method for the operation of a filter arrangement as claimed in one of the claims 1 to 9, **characterized in that** the voltage pulses are used with a pulse duration chosen depending on the mobility of the electrons in the electric field, with the duration $\tau$ corresponding to the voltage pulses of the relationship:

$$2 \cdot 10^{-5} \geq \tau \geq d/E \cdot 10^{-3} \; cm^2/V \; sec,$$

with d meaning the width of the channels in the direction of the electric field in cm and E meaning the field amplitude in V/cm.

11. A method for the operation of a filter arrangement as claimed in claim 10, **characterized in that** the pulse duration $\tau$ of the voltage pulses corresponds to the relationship

$$5 \cdot 10^{-6} \geq \tau \geq d/E \cdot 10^{-3} \; cm^2/V \; sec.$$

12. A method for the operation of a filter arrangement as claimed in one of the claims 1 to 11, **characterized in that** any occurring spark discharges are detected and that after each spark discharge the duration of the voltage pulses is gradually reduced or the duration of the pauses between two voltage pulses each is increased gradually.

13. A method for the operation of a filter arrangement as claimed in one of the claims 1 to 12, **characterized in that** in the case of low exhaust particulate occurrence, the pauses between the voltage pulses are extended, with the pressure drop over the honeycomb body or specific operational data of the internal combustion engine such as injected quantity, speed and temperature being detected and evaluated in order to detect the occurrence of exhaust particulates.

**Revendications**

1. Système de filtrage destiné à la séparation et à la transformation en substances gazeuses de particules de suie d'un flux de gaz d'échappement dans lequel on fait passer les gaz d'échappement par des canaux (1, 2) d'un filtre en nid d'abeilles (6) réalisé dans une céramique poreuse, lesdits canaux s'étendant suivant la direction axiale et une source de tension étant appliquée à des électrodes (3, 4) orientées parallèlement aux canaux (1, 2) et générant dans lesdits canaux (1, 2) un champ électrique perpendiculaire à l'extension longitudinale de ceux-ci, **caractérisé en ce que** chacun des canaux (1, 2) du filtre en nid d'abeilles (6) n'est ouvert que sur une face d'extrémité (9) du filtre et qu'ils sont fermés sur l'autre face d'extrémité (10) de celui-ci de manière à ce que les canaux (1, 2), qui sont chacun disposés à la même distance normale de l'une des électrodes (3, 4), sont soit tous ouverts ou tous fermés sur leur face d'extrémité (9) et que la source de tension génère un champ d'impulsions.

2. Système de filtrage selon la revendication 1, **caractérisé en ce que** des canaux (1, 2) voisins, disposés à une distance normale différente des électrodes (3, 4), sont décalés à la manière des briques d'un mur de maçonnerie et que la section des canaux (1, 2) perpendiculaire à l'électrode (3, 4) est bien inférieure à la section qui s'étend parallèlement à celle-ci.

3. Système de filtrage selon la revendication 1 ou 2, **caractérisé en ce qu'**un système destiné à charger électriquement les gaz d'échappement est monté en amont du filtre en nid d'abeilles (6).

4. Procédé de fonctionnement d'un système de filtrage destiné à la séparation et à la transformation en substances gazeuses de particules de suie d'un flux de gaz d'échappement dans lequel on fait passer les gaz d'échappement par des canaux (1, 2) d'un filtre en nid d'abeilles (6) réalisé dans une céramique poreuse, lesdits canaux s'étendant suivant la direction axiale et une tension étant appliquée au filtre en nid d'abeilles (6) à des électrodes (3, 4) orientées parallèlement aux canaux (1, 2), **caractérisé en ce que** des impulsions de tension appliquées aux électrodes (3, 4) génèrent dans les canaux (1, 2) un champ électrique d'impulsions orienté perpendiculairement à l'extension longitudinale de ceux-ci.

5. Procédé de fonctionnement d'un système de filtrage selon la revendication 4, **caractérisé en ce que** les impulsions de tension appliquées aux électrodes (3, 4) présentent des polarités différentes, le changement de polarité ayant lieu après un certain nombre d'impulsions.

6. Procédé de fonctionnement d'un système de filtrage selon la revendication 4 ou 5, **caractérisé en ce que** les impulsions de tension utilisées ont une durée comprise entre $10^{-8}$ et $2 \cdot 10^{-5}$ sec., lesdites impulsions générant dans les canaux (2) du filtre en nid d'abeilles une intensité de champ d'au moins 2 kV/cm à une température de 120 °C et une intensité de champ d'au moins 0,5 kV/cm à une température de 400 °C.

7. Procédé de fonctionnement d'un système de filtrage selon la revendication 6, **caractérisé en ce que** les impulsions de tension utilisées ont une durée comprise entre $10^{-7}$ et $5 \cdot 10^{-6}$ sec.

8. Procédé de fonctionnement d'un système de filtrage selon la revendication 6, **caractérisé en ce que**, à une température de 120 °C, les impulsions de tension génèrent dans les canaux (2) du filtre en nid d'abeilles une intensité de champ d'au moins 3 kV/cm.

9. Procédé de fonctionnement d'un système de filtrage selon la revendication 6, **caractérisé en ce que**, à une température de 400 °C, les impulsions de tension génèrent dans les canaux (2) du filtre en nid d'abeilles une intensité de champ d'au moins 1 kV/cm.

10. Procédé de fonctionnement d'un système de filtrage selon l'une quelconque des revendications 1 à 9, **caractérisé en ce que** les impulsions de tension utilisées ont une durée d'impulsions choisie en fonction de la mobilité des électrons dans le champ électrique, la durée $\tau$ des impulsions de tension correspondant à l'encadrement :

$$2 \cdot 10^{-5} \geq \tau \geq d/E \cdot 10^{-3} \text{ cm}^2/\text{V sec.,}$$

d étant mis pour la largeur des canaux dans la direction du champ électrique en cm et E pour l'amplitude du champ en V/cm.

11. Procédé de fonctionnement d'un système de filtrage selon la revendication 10, **caractérisé en ce que** la durée $\tau$ des impulsions de tension correspond à l'encadrement

$$5 \cdot 10^{-6} \geq \tau \geq d/E \cdot 10^{-3} \text{ cm}^2/\text{V sec.}$$

12. Procédé de fonctionnement d'un système de filtrage selon l'une quelconque des revendications 1 à 11, **caractérisé en ce que** d'éventuelles décharges disruptives sont enregistrées et qu'après chaque décharge disruptive la durée des impulsions de tension est graduellement diminuée ou la durée des pauses entre deux impulsions de tension est graduellement rallongée.

13. Procédé de fonctionnement d'un système de filtrage selon l'une quelconque des revendications 1 à 12, **caractérisé en ce qu'**en présence de peu de suie, les pauses entre les impulsions de tension sont rallongées, la quantité de suie produite étant mesurée en enregistrant et évaluant la chute de pression au-dessus du nid d'abeilles ou bien les paramètres de fonctionnement spécifiques du moteur à combustion interne à savoir par exemple la quantité d'injection, la vitesse et la température.

Fig. 1

Abgas

6      7

9      8      10

Fig. 2

offener
Kanaleingang 1

geschlossener
Kanaleingang 2

5

9      10

geschlossener
Kanalausgang

offener
Kanalausgang

Fig. 3

4

1

2

3

Fig. 4

5

9      10

Fig. 5

Fig. 6

Fig. 7

Fig. 8

Impulsfolgen

10-50 kV

GND

Spannungsmessung 20

R

R

Strommessung 19

Impulswandler 18

Steuerteil 17

DC-DC-Wandler 16

Temperatur

Druck

Drehzahl

Gleichspannungs-
Quelle 15

GND